# EUROPEAN PATENT SPECIFICATION

(11) **EP 2 610 714 B1**
(45) Date of publication and mention of the grant of the patent: **10.08.2016**
(21) Application number: 12290009.5
(22) Date of filing: 02.01.2012
(51) Int. Cl.: G06F 3/01, G06F 3/03

(54) **Depth camera enabled pointing behavior**
Von einer Tiefenkamera aktiviertes Zeigeverhalten
Comportement de pointage activé par une caméra à profondeur

(43) Date of publication of application: 03.07.2013
(73) Proprietor: ALCATEL LUCENT, 92100 Boulogne-Billancourt (FR)
(72) Inventor: Lou, Zhe, 2650 Egedem (BE); Van Broeck, Sigurd, 2980 Zoersel (BE); Van den Broeck, Marc, 2860 Sint-Katelijne Waver (BE)
(74) Representative: ALU Antw Patent Attorneys

(56) References cited:
- EP-A2- 0 571 702
- WO-A1-2011/018901
- Martin Haker, Martin Böhme, Thomas Martinetz and Erhardt Barth: "Deictic Gestures with a Time-of-Flight Camera", Institute for Neuro- and Bioinformatics, University of Lübeck Lecture Notes in Computer Science, vol. 5934 2010, pages 110-121, XP002677133, DOI: 10.1007/978-3-642-12553-9_10 ISBN: 978-3-642-12552-2 Retrieved from the Internet: URL:http://web.archive.org/web/20110607105 809/http://www.inb.uni-luebeck.de/publikat ionen/pdfs/HaBoMaBa09.pdf [retrieved on 2012-05-25]

## Description

### Field of the invention

The invention relates to a method of and a marking device for marking a pointing position of a pointing object in a target area, and a computer program.

### Background

When a presenter is making a presentation in front of an audience in an auditorium, the presenter may be located between a projector screen showing slides and the audience. In the case in which the presenter intends to mark a portion of a slide on the projector screen, the presenter may physically point to the portion of a slide by raising his stretched arm and pointing with his finger or his hand to the desired portion of the slide. The presenter may also use a pole for pointing to the portion of the slide. Further, the presenter may alternatively use a laser pointer which emits a light beam being visualized by a red light spot on the desired portion of the slide to be marked.

However, using the arm, the pole or the laser pointer for marking a desired portion of the slide may result in a poor marking of the desired portion of the slide, since the presenter may move during this marking procedure. In a case in which the presenter may be far away from the projector screen and may point with his hand or finger, the audience cannot recognize the portion of the slide to be highlighted. Further, the laser pointer does also not leave a track on the propagation path of the light beam towards the projector screen such that the presenter is not able to accurately select the portion to be highlighted in advance. Further, the displayed light spot of the laser pointer may comprise a small cross section such that the audience cannot sec the marked portion of the slide.

Thus, a user experience of the presenter and/or the audience during the marking of a desired portion of the screen may be poor.

EP 0 571 702 A2 discloses a hand pointing type input unit and wall computer module, wherein direction calculating means are provided to calculate a direction which is indicated by a hand or finger of the user.

WO 2011/018901 A1 discloses an image recognition device, operation determination method, and a program.

Martin Haker, Martin Böhme, Thomas Martinetz and Erhard Barth: "Deictic Gestures with a Time-of-Flight Camera", Institute for Neuro- and Bioinformatics, University of Lübeck Lecture Notes in Computer Science, vol. 5934 2010, pages 110-121, XP002677133 discloses a robust detector for deictic gestures based on a Time-of-Flight (TOF) Camera.

### Summary

It may be an object of the present invention to enable a marking procedure of a pointed position of a pointing object in a target area comprising a high user experience of a person pointing to the pointed position and/or a person observing the target area.

The object defined above is solved by a method of marking a pointed position of a pointing object in a target area, a marking device for marking a pointed position of a pointing object in a target area, and a computer program according to the independent claims.

According to an exemplary aspect of the invention, a computer program is provided. The computer program, when being executed by a processor, is configured to carry out or control a method of marking a pointed position of a pointing object in a target area.

Within the context of the present application the term pointing position is used tantamount to the term pointed position.

Within the context of the present application the term "pointing position of a pointing object in a target area" may particularly denote a position or a place in the target area which may be pointed at by the pointing object. In particular, the pointing position may be defined by a location and/or an orientation of the pointing object.

Tile term "target area" may particularly denote a two dimensional area. The target area may be disposed substantially in a plane parallel to the acquiring unit of the marking device.

Alternatively, the target area may be disposed substantially in a plane oriented at a non-zero angle relative to the acquiring unit of the marking device.

The term "depth image" may particularly denote a two dimensional array of a plurality of basic units, for example pixels, indicating depth information of objects in an acquired field of view associated with the depth image. In particular, the depth information of the depth image may be visualized by a grey colour scale of the basic units of the acquired depth image. In particular, the depth image may indicate a depth map of the acquired field of view.

The term "the pointing object points to the pointing position in the target area" may particularly denote that a pointing axis of the pointing object may essentially hit the pointing position being part of the target area.

According to the exemplary aspects of the invention, a pointing position defined by a pointing object in a target area may be highlighted or emphasized by a displayed marking. To this end, a depth image of the pointing object and the target area may be acquired. Spatial information of the pointing object relative to the target area may be derived from the acquired depth image, in order to determine a location of the pointing position of the pointing object in the target area. The determined location information may be used as input parameter to display the marking of the pointing position in the target area.

Using an acquired depth image may enable an accurate and reliable measure to determine the location of the pointing position in the target area, since information at one time instance may be used for the marking of the pointing position in the target area. In particular, movements of the pointing object do not reduce the accuracy of the marking of the pointing position.

Further, by using one device for the determination of the locating and the marking of the pointing position in the target area, namely the marking device, additional equipment may be superfluous during the marking procedure. Thus, the method may be executed in an efficient and easy way.

Further, although the pointing object may be arranged distant from the target area, an observer of the target area may, in comparison to a person pointing with his finger or arm, easily recognize the pointing position, since a marking may be displayed in the target area.

Altogether, a user experience of a person associated with the pointing object and/or the marking device and/or a user experience of a person observing the target area may be enhanced.

Next, further exemplary embodiments of the method will be explained. However, these embodiments also apply to the marking device, and the computer program.

In particular, the pointing object may comprise an arm and/or a hand of a person. Alternatively, the pointing object may be configured as a wooden pole to be held by a person or any other elongated object held in the same manner.

In particular, the marking may be displayed at the determined location of the pointing position and/or at a predefined location distinct from the location of the pointing position. Thus, the marking of the pointing position in the target area may be executed in a predictable way such that a user associated with the pointing object and/or the marking device may be enabled to adapt his behaviour to optimize the marking procedure.

In particular, the acquiring unit of the marking device and the target area may be fixed in a stationary position. Further, the pointing object may be located between the acquiring unit and the target area, and thus may be situated such that the pointing object has no physical contact with the target area. Further, the pointing object may be also essentially stationary relative to the marking device and the target area, thereby facilitating the determination of the location of the pointing position and thus enhancing the user experience.

The method may further comprise determining a distance between a reference point of the pointing object and the target area, and the determining of the location of the pointing position may comprise determining the location of the pointing position based on the determined distance. The term "distance" may particularly denote a shortest connection between the reference point and the target area. In particular, the distance may geometrically correspond to a distance line starting at the reference point and crossing the target area under a right angle at a perpendicular foot. Accordingly, in order to determine the distance between the reference point and the target area, a reference point may be selected in the depth image. A distance line may be then determined comprising the reference point and the perpendicular foot. Thus, the accuracy of the marking procedure may be enhanced, since geometric information of the pointing object and the target area may be used.

In particular, the reference point may correspond to any point of the reference object. For example, the reference point may be a point at a surface of the reference object and/or a point on the pointing axis.

The method may further comprise determining a pointing angle defined between the pointing axis and a distance line associated with a distance between the pointing object and the target area, and the determining of the location of the pointing position may comprise determining the location of the pointing position based on the determined pointing angle. The latter mentioned distance and distance line may correspond to the distance and the distance line explained above. The determination of the pointing angle may comprise evaluating a dot product of the distance line and a line representation of the pointing axis. Thus, the location of the pointing position in the target area may be easily and accurately calculated using mathematical calculations.

In particular, a suitable algorithm may be used for numerically determining the location of the pointing position. Alternatively or additionally, the location of the pointing position in the target area may be analytically determined based, for example, on trigonometric identities.

The acquiring of the depth image may comprise time of flight based sensing of the pointing object and the target area or stereo matching based sensing of the pointing object and the target area. Here, the time of flight based sensing may comprise emitting light pulses, for example of infrared wavelengths, to all objects in a field of view of the marking device, and sensing the light reflected from a surface of each object such that a depth information may be acquired based on the measured propagation time of the emitted light from its emission incidence to its sensing incidence. Stereo matching based sensing may employ correlating information of two separately emitted light beams hitting a same object point, in order to acquire depth information in a field of view of the marking device. Thus, conventional procedures may be employed for acquiring the depth image, thereby facilitating the marking of the pointing position in the target area.

The method may further comprise generating a feedback signal indicating the determined location of the pointing position in the target area, and providing the generated feedback signal for adapting the location of the pointing position of the pointing object. The steps of generating the feedback signal and providing the feedback signal may be executed prior to the step of the displaying of the marking of the pointing position in the target area. The providing of the feedback signal may be accomplished, for example, by visualizing or displaying an indicator in the target area indicating the determined pointing position. The indicator may, for example, be configured as a red light spot caused by a light beam emitted by the displaying unit of the marking device. A location and/or an orientation of the pointing object may be adapted based on the feedback signal such that an optimum location of the pointing position may be determined. Thus, the accuracy of the marking of the pointing position in the target area may be significantly increased, since the optimum location of the pointing position may be iteratively determined based on the feedback signal. In case of a numerical determination of the pointing position, a stability of an underlying algorithm may be increased, since the feedback signal may be used as further input parameter.

The method may further comprise determining a configuration of the pointing object, and the displaying of the marking may comprise displaying the marking based on the determined configuration of the pointing object. The term "configuration of the pointing object" may particularly denote a shape of the pointing object at one time instance, for example during the acquisition of the depth image. For example, the pointing object may comprise an elongated shape, or an angled shape in terms of an ending portion of the pointing object being angled with respect to the pointing axis defined by the essentially elongated shape of the pointing object. In particular, a static characteristic of the marking to be displayed may be selected based on the determined configuration of the pointing object. An association between a configuration of the pointing object and the selected characteristics of the marking may be predefined, for example by the user of the marking device. Therefore the flexibility of the marking procedure may be increased.

In particular, in the case of the pointing object comprising the arm and/or the hand of a person, the configuration of the pointing object may correspond to a hand posture of the person. Determination of the configuration of the pointing object may comprise pattern recognition, and a configuration of the pointing object derived from the depth image may be compared to stored information of possible configurations of the or a similarly shaped pointing object.

In particular, the characteristic of the marking to be selected may comprise or may be configured as a shape and/or a color of the marking. A shape of the marking may comprise at least one of a line, an arrow, an ovoid, a hand, a foot, and an animal.

The method may further comprise determining a time dependent change of a configuration of the pointing object, and the displaying of the marking may comprise displaying the marking based on the determined time dependent change of the configuration of the pointing object. The latter mentioned configuration may correspond to the above explained configuration of the pointing object. The term "time dependent configuration" of the pointing object may particularly denote a shape change of the pointing object during a time interval associated with a plurality of depth images. A time-varying characteristic of the marking may be selected based on the time dependent change of the configuration of the pointing object. For example, the marking may then comprise at least one of a line being drawn, a color change, a circle being drawn, and hand writing. An association between a time dependent change of the configuration of the pointing object and the selected characteristics of the marking may be predefined, for example by the user of the marking device. Thus, an interaction between a person observing the target area and a user associated with the marking device and/or the pointing object may be enabled, thereby enhancing the user experience of both persons.

In particular, in the case of the pointing object comprising the arm and/or the hand of a person, the time dependent change of the configuration of the pointing object may correspond to a hand gesture of the hand of the person. Determination of the time dependent change of the configuration of the pointing object may be based on pattern recognition, and a time dependent change of the configuration of the pointing object derived from a plurality of depth images may be compared to stored information of possible time dependent changes of the configuration of the or a similarly shaped pointing object.

The method may further comprise acquiring at least another depth image of the pointing object and the target area, wherein the pointing object may be arranged distant from the target area and may point to the pointing position in the target area, and the determining of the location of the pointing position in the target area may be based on the at least another acquired depth image. In particular, a plurality of depth images may be acquired for the determining of the location of the pointing position in the target area. In particular, the method may further comprise averaging the determined locations of the pointing position derived from the plurality of depth images, in order to increase the accuracy, reliability and stability of the marking procedure. In particular, unintentional movements of the pointing object may be accounted for.

The displaying of the marking may comprise adapting a characteristic of the displayed marking based on the determined configuration of the pointing object and/or the determined time dependent change of the configuration of the pointing object. Thus, during the display of the marking in the target area and/or between successive displays of the marking, a characteristic of the displayed marking may be changed, in order to vary the emphasis to be put on the pointing position.

The target area may comprise a projector screen, a television screen or a board. Thus, the method and the marking device may be used in conjunction with a presenter making a presentation using a projector screen. Further, displayed video information on a television screen may be marked during a video conference. Further, stationary information, for example adhesive tabs, fixed on the board may be marked. Thus, the method and the marking device maybe versatily applicable.

Next, further exemplary embodiment of the marking device will be explained. However, these embodiments also apply to the method, and the computer program.

In particular, the marking device may be configured to automatically execute one or more steps of the method. Thus, a potential for failures owing to human error may be reduced.

The marking device may be configured as a depth camera, particularly a time of flight camera, a Zcam, or a stereo camera.

### Brief description of the drawings

The invention will be described in more detail hereinafter with reference to examples of embodiment but to which the invention is not limited.
Fig. 1 shows an arrangement associated with a method of marking a pointing position of a pointing object in a target area according to an exemplary embodiment of the invention.
Fig. 2 is a flowchart illustrating the method associated with the arrangement of Fig. 1
Fig. 3 shows a geometric model used during the method of Fig. 2.
Fig. 4 shows a projector screen of the arrangement of Fig. 1 in which a marking of a determined location of a pointing position is displayed.
Fig. 5 shows a functionality based design of the marking device of Fig. 1.

### Detailed description of embodiments

The illustration in the drawing is schematic. It is noted that in different fgures, similar or identical elements are provided with the same reference signs.

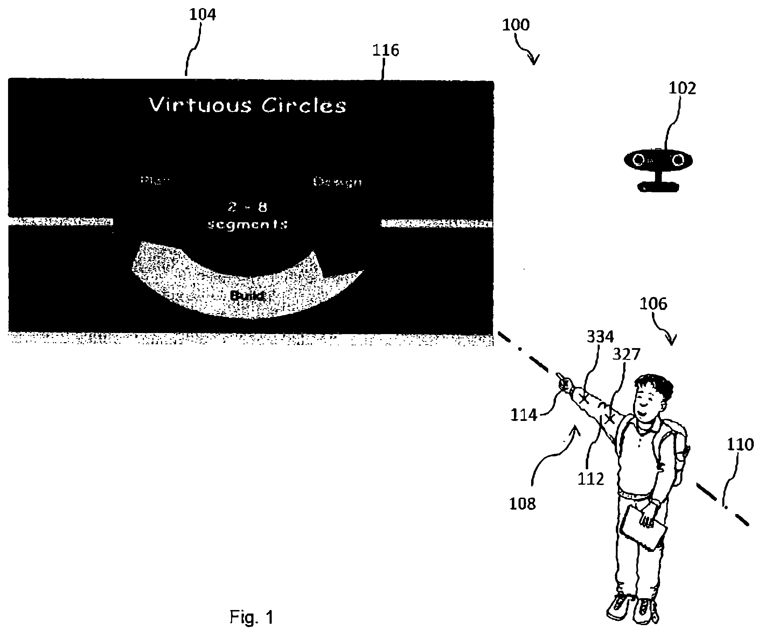

Referring to Fig. 1, an arrangement 100 associated with a method of marking a pointing position of a pointing object in a target area according to an exemplary embodiment of the invention will be explained. The arrangement 100 comprises a marking device 102 in the form of a time of flight camera, a target area 104 which is part of a projector screen, and a presenter 106. For ease of explanation, the target area and the projector screen will be denoted in the following with the common reference numeral 104.

The projector screen 104 is configured to show time varying information which are conceived in successively displayed slides. Fig. 1 shows a screen shot of a slide displayed on the projector screen 104.

The time of flight camera 102 and the projector screen 104 are arranged in a stationary way, and are located at a known distance from one another. Further, the time of flight camera 102 comprises a field of view in which the projector screen 104 and the presenter 106 are located. The presenter 106 is standing between the projector screen 104 and the time of flight camera 102.

The arrangement 100 is associated with the presenter 106 making a presentation in the front of an audience, and enables the presenter 106 to highlight or emphasize a particular portion of a slide displayed in the projector screen 104 by overlaying a marking over the slide.

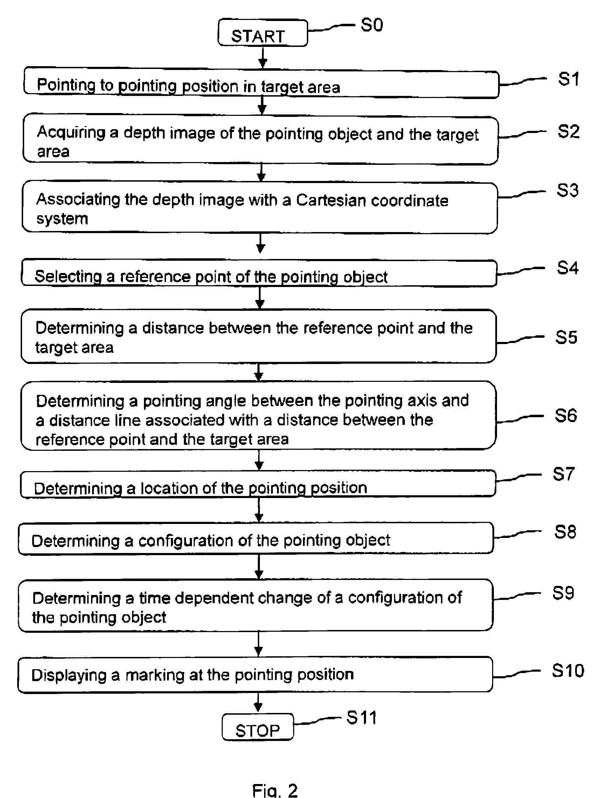

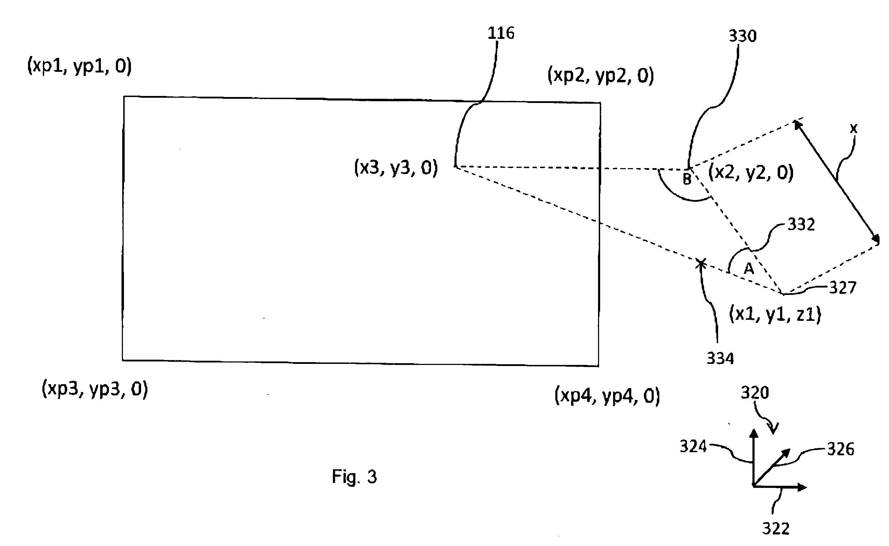

In the following, the method of marking a pointing position of the pointing object 108 in the target area 104 according to the exemplary embodiment of the invention will be explained with reference to Figs. 2 to 4.

In a step S0, the method starts. In a next step S1, the presenter 106 points to the particular portion using a pointing object 108. As illustrated in Fig. 1, the pointing object 108 comprises an essentially elongated shape along a pointing axis 110, and is configured as a right arm 112 and a right hand of the presenter 106. Alternatively, the pointing object 108 may be configured as a wooden pole or the like which may be held by the presenter 106.

In a next step S2, the time of flight camera 102 acquires a depth image of the presenter 106 standing in front of the projector screen 104 and pointing to a pointing position 116 in the slide shown on the projector screen 104. The pointing position 116 of the pointing object 106 is associated with the pointing axis 110 intersecting the projector screen 104. In the following, it is assumed that the word "Design" shown in the slide on the projector screen 104 represents the pointing position 116. The image acquisition is based on time of flight based sensing of the field of view of the time of flight camera 102. Alternatively, the marking device 102 may be configured as a stereo camera operating using stereo matching based sensing of the pointing object 108 and the target area 104.

Next, in a step S3, the time of flight camera 102 associates the acquired depth image with a Cartesian coordinate system 320 comprising an x-axis 322, a y-axis 324 and a z-axis 326. Accordingly, the time of flight camera 102 attributes Cartesian coordinates to edge points of the projector screen 104 with the z-coordinate of the projector screen 104 being set to zero. Thus, the edge points of the projector screen 104 comprise the coordinates (xp1, yp1, 0), (xp2, yp2, 0), (xp3, yp3, 0), and (xp4, yp4, 0).

In a next step S4, a reference point 327 of the pointing object 108 is selected by the time of flight camera 102. The reference point 327 is part of the pointing object 108, and is a point on a surface of the arm 112 of the presenter 106. The reference point 327 comprises the coordinates (x1, y1, z1) in the coordination system 320.

Next, in a step S5, the time of flight camera 102 determines a distance x between the reference point 327 and the projector screen 104 by dropping a perpendicular line between the reference point 327 and a plane 328 comprising the projector screen 104, i.e. the edge points of the projector screen 104. Accordingly, a perpendicular foot 330 in the plane 328 is identified which has coordinates (x2, y2, 0). In a case in which the arm 112 of the presenter 106 is located in front of the projector screen 104, the perpendicular foot 328 may also be located within an area bordered by the edge points of the projector screen 104. The distance x is calculated by subtracting, per each coordinate, the perpendicular foot 330 from the reference point 327.

Next, in a step S6, the time of flight camera 102 determines a pointing angle A which is defined between the pointing axis 110 and a distance line 332 associated with the distance x between the reference point 327 of the pointing object 108 and the perpendicular foot 330. To this end, another reference point 334 of the arm 112 is selected, and a distance between the reference point 327 and the another reference point 334 is calculated using the coordinates of these two points 327, 334. A line comprising the reference point 327 and the another reference point 334 approximate the pointing axis 110. The pointing angle A is then determined based on a line associated with the distance between the reference point 327 and the another reference point 334, the distance line 332, the distance between the reference point 327 and the another reference point 334, and the distance x in that a dot product of the two latter lines is evaluated. Information about the coordinates of the edge points of the projector screen 104 are employed to determine the location of the pointing position 116.

In a following step S7, a location of the pointing position 116 in the projector screen 104 is determined based on the coordinates of the reference point 327, the coordinates of the perpendicular foot 330, the determined pointing angle A and the perpendicular angle B defined between the distance line 332 and the plane 328. For example, trigonometric identities may be used for this determining step. Thus, the coordinates of the pointing position 116 are identified to be (x3, y3, 0).

Next, in a step S8, the time of flight camera 102 determines a configuration of the pointing object 108, namely a hand posture of the hand 114, using pattern recognition, in order to select a characteristic of a marking to be displayed at the pointing position 116. Since the hand 114 is straightened and exclusively a forefinger of the hand 114 is pointing to the pointing position 116, the time of flight camera 102 determines that an ellipse-type marking is to be selected.

Next, in a step S9, a time dependent change of the configuration of the pointing object, a hand gesture of the hand 114 of the presenter 106, is determined in a predetermined time interval, in order to select a time varying characteristic of the marking to be displayed. To this end, a plurality of depth images is acquired, and pattern recognition is employed to identify the hand gesture. Assuming the hand to be rotating around the pointing axis 110, the time of flight camera 102 determines that the colour of the marking to be displayed is to be changed from yellow to green.

Alternatively, based on the determination in the step S8, a first part of the marking, for example a red circle, may be selected to be displayed, and based on the determination in the step S9, a second part of the marking, for example a yellow line, may be selected to be drawn on the slide within a fixed time interval.

Next, in a step S10, the time of flight camera 102 displays the marking 436 in the form of a yellow ellipse around the location of the pointing position 116 in the slide of the projector screen 104 in order to mark the word "Design" at the pointing position 116. In a step S11, the method stops. Alternatively, the steps S1 to S10 will be repeated during the complete time the presenter 106 makes his presentation.

In order to enhance the accuracy of the determination of the location of the pointing position 116 and the selection of the characteristics of the marking 436, a plurality of depth images may be acquired by the time of flight camera 102. Coordinates of determined locations of the pointing position 116 and respective results of the determined configurations of the pointing object 108 and the determined change of the configuration derived from the plurality of depth images may be averaged.

Further, the time of flight camera 102 may generate a feedback signal 438 indicating a determined pointing position 116 in the projector screen 104, and may provide the generated feedback signal 438 to the presenter 106 prior to the display of the marking 436 at the determined pointing position 116 in the step S10. Thus, the presenter 106 may be capable of determining whether the determined pointing position 116 may coincide with a desired pointing position such that the location of the marking 436 to be displayed may be adapted prior to the display of the marking 436. The feedback signal 438 may be formed by a red laser spot of a small cross-section, which results from a laser beam emitted by the time of flight camera 102 and hitting the projector screen 104. Since the red laser spot may comprise the small cross section, the laser spot may be only visible for the presenter 106. Once the presenter 106 may recognize the laser spot in the slide on the projector screen 106, the presenter 106 may adapt a location and/or an orientation of a part of the pointing object 106, namely the arm 112, to optimize the determined location of the pointing position 116. The latter procedure may be executed prior to the step S10 and optionally also prior to the steps S8 and/or S9, and may be repeated several times until the desired location of the pointing position 116 coincides with the determined location of the pointing position 116. To this end, the time of flight camera 102 may acquire a depth image for each generated feedback signal 438.

In order to adapt a characteristic of the marking 436, the presenter 106 may change the posture of his hand 114 and/or the time dependent gesture of his hand 114. The time of flight camera 102 may accordingly determine the change using successively acquired depth images, and the characteristic of the marking 436 may be adapted either during the display of the marking 436 or between successive displays of the marking 436.

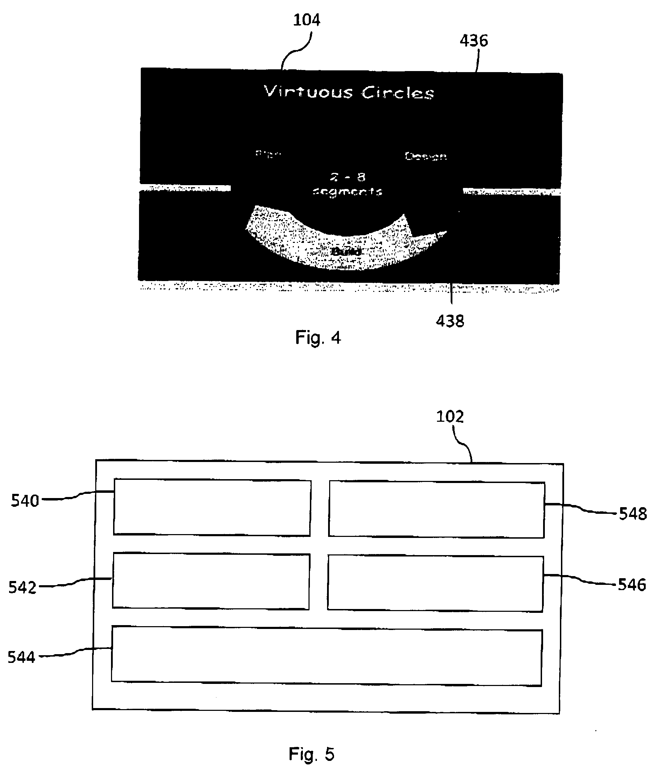

Referring to Fig. 5, the time of flight camera 102 for marking the pointing position 116 of the pointing object 108 in a target area 104 illustrated in Fig. 1 will be explained in more detail.

The time of flight camera 102 comprises an acquiring unit 540 configured to acquire the depth image of the pointing object 108 and the target area 104. To this end, as explained above, the pointing object 108 is arranged distant from the target area 104 and points to the pointing position 116 in the target area 104. Further, the time of flight camera 102 comprises a first determining unit 542 configured to determine the location of the pointing position 116 in the target area 104 based on the acquired depth image, and a displaying unit 544 configured to display the marking 436 of the pointing position 116 in the target area 104 based on the determined location of the pointing position 116. The first determining unit 542 is also configured to determined the distance x and the pointing angle A based on the acquired depth image.

Further, the time of flight camera 102 comprises a second determining unit 546 configured to determine a configuration of the pointing object 108. In the shown embodiment, the second determining unit 546 represents a hand posture determining unit operating based on pattern recognition of the hand posture of the hand 114 of the presenter 106. A third determining unit 548 of the time of flight camera 102 is configured to determine a time dependent change of a configuration of the pointing object 108, and represents a hand gesture determining unit operating based on pattern recognition of the gesture of the hand 114 of the presenter 106.

The displaying unit 544 is also configured to display or adapt the display of the marking 436 based on the determined configuration of the pointing object 108, i.e. the hand posture of the hand 114, and is configured to display or adapt the display of the marking 436 based on the determined time dependent change of the configuration of the pointing object 108, i.e. the hand gesture of the hand 114 of the presenter 106.

The acquiring unit 540 also comprises a light emitting subunit configured to emit light pulses. The acquiring unit 540 additionally comprises a light receiving subunit configured to receive the emitted light pulses after a reflection of the emitted light pulses at the pointing object 118, the target area 104, and other objects in the field of view of the time of flight camera 102. The light emitting subunit is configured as a light emitting diode (LED), and the light receiving subunit is configured as a photo diode.

At least two of the above mentioned units 540-548 of the time of flight camera 102 may be integrally formed and/or may be part of a processor. Further, an association between functionality based and actual physical units of the time of flight camera 102 may differ from the above described embodiment.

While the invention has been illustrated and described in detail in the drawings and foregoing description, such illustration and description arc to be considered illustrative or exemplary and not restrictive; the invention is not limited to the disclosed embodiments.

Other variations to be disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measures cannot be used to advantage. Any reference signs in the claims should not be construed as limiting scope.

## Claims

1. A method of marking a pointed position (116) of a pointing object (108) in a target area (104) that comprises a projector screen, a television screen or a board, wherein the pointing object (108) comprises an elongated shape along a pointing axis (110), wherein the pointed position (116) is associated with the pointing axis (110) intersecting the target area (104), the method comprising:
- acquiring (S2) a depth image of the pointing object (108) and the target area (104), wherein the pointing object (108) is located distant from the target area (104) and points to the pointed position (116) in the target area (104) using a camera (102)
- determining (S7) a location of the pointed position (116) in the target area (104) based on the acquired depth image,
- generating (S10) a feedback signal (438) indicating the determined location of the pointed position (116) in the target area (104), wherein the feedback signal (438) results from a laser beam emited by the camera (102),
- determining (S8) a configuration of the pointing object (108), namely a hand posture of a hand (114) using pattern recognition, in order to select a characteristic of a marking to be displayed at the pointing position (116),
- determining (S9) a time dependent change of the configuration of the pointing object, a hand gesture of the hand (114) of the presenter (106), in a predetermined time interval, in order to select a time varying characteristic of a marking (436) to be displayed, wherein a plurality of depth images is acquired, and pattern recognition is employed to identify the hand gesture, **characterized by**
- providing the generated feedback signal (438) to a presenter (106) prior to the display of the marking (436) at the determined location of the pointed position (116), and
- displaying (S10) the marking (436) of the pointed position (116) in the target area (104) based on the determined location of the pointed position (116).

2. The method according to claim 1, the method further comprising:
- determining (S5) a distance (x) between a reference point (327) of the pointing object (108) and the target area (104),
wherein the determining (S7) of the location of the pointed position (116) comprises determining (S7) the location of the pointed position (116) based on the determined distance (x).

3. The method according to claim 1 or 2, the method further comprising:
- determining (S7) a pointing angle (A) defined between the pointing axis (110) and a distance line (232) associated with a distance (x) between the pointing object (116) and the target area (104),
wherein the determining (S7) of the location of the pointed position (116) comprises determining (S7) the location of the pointed position (116) based on the determined pointing angle (A).

4. The method according to any one of claims 1 to 3, wherein the acquiring (S2) of the depth image comprises time of flight based sensing of the pointing object (108) and the target area (104) or stereo matching based sensing of the pointing object (108) and the target area (104).

5. The method according to any one of claims 1 to 4, wherein the displaying (S10) of the marking (436) comprises adapting a characteristic of the displayed marking (436) based on the determined configuration of the pointing object (108) and/or the determined time dependent change of the configuration of the pointing object (108).

6. A marking device (102) for marking a pointed position (116) of a pointing object (108) in a target area (104) that comprises a projector screen, a television screen or a board, wherein the pointing object (108) comprises an elongated shape along a pointing axis (110), wherein the pointed position (116) is associated with the pointing axis (110) intersecting the target area (104), the marking device (102) comprising:
- means for emitting a laser beam,
- an acquiring unit (540) configured to acquire a depth image of the pointing object (108) and the target area (104), wherein the pointing object (108) is arranged distant from the target area (104) and points to the pointed position (116) in the target area (104),
- a first determining unit (542) configured to determine a location of the pointed position (116) in the target area (104) based on the acquired depth image,
- the first determining unit (542) and a displaying unit (544) configured to generate a feedback signal (438) indicating the determined location of the pointed position (116) in the target area (104), wherein the feedback signal (438) results from a laser beam emitted by the marking device (102),
- a second determining unit (546) configured to determine a configuration of the pointing object (108), namely a hand posture of a hand (114) using pattern recognition, in order to select a characteristic of a marking (436) to be displayed at the pointing position (116),
- a third determining unit (548) configured to determine a time dependent change of the configuration of the pointing object (108), and represents a hand gesture determining unit operating based on pattern recognition of the gesture of the hand (114) of the presenter (106), **characterized by**
- the marking device (102) configured to provide the generated feedback signal (438) to a presenter (106) prior to the display of the marking (436) at the determined location of the pointed position (116), and
- the displaying unit (544) configured to display a marking (436, 438) of the pointed position (116) in the target area (104) based on the determined location of the pointed position (116).

7. The marking device (102) according to claim 6; wherein the marking device (102) is configured as a depth camera.

8. A computer program, which, when being executed by a processor, is configured to carry out or control a method of marking a pointed position (116) of a pointing object (108) in a target area (104) according to any one of claims 1 to 5.

## Patentansprüche

1. Verfahren zum Markieren einer gezeigten Position (116) eines Zeigeobjekts (108) in einem Zielbereich (104), der eine Projektorleinwand, einen Fernsehbildschirm oder eine Tafel umfasst, wobei das Zeigeobjekt (108) eine längliche Form entlang einer Zeigeachse (110) umfasst, wobei die gezeigte Position (116) der Zeigeachse (110) zugeordnet ist, die den Zielbereich (104) schneidet, wobei das Verfahren Folgendes umfasst:
- Aufnehmen (S2) eines Tiefenbilds des Zeigeobjekts (108) und des Zielbereichs (104), wobei das Zeigeobjekt (108) vom Zielbereich (104) beabstandet ist und zur gezeigten Position (116) im Zielbereich (104) unter Verwendung einer Kamera (102) zeigt,
- Bestimmen (S7) eines Orts der gezeigten Position (116) im Zielbereich (104) basierend auf dem aufgenommenen Tiefenbild,
- Erzeugen (S10) eines Rückkopplungssignals (438), das den bestimmten Ort der gezeigten Position (116) im Zielbereich (104) angibt, wobei das Rückkopplungssignal (438) von einem Laserstrahl stammt, der von der Kamera (102) ausgesendet wird,
- Bestimmen (S8) einer Konfiguration des Zeigeobjekts (108), nämlich einer Handhaltung einer Hand (114), unter Verwendung von Mustererkennung, um ein Merkmal einer an der Zeigeposition (116) anzuzeigenden Markierung auszuwählen,
- Bestimmen (S9) einer zeitabhängigen Änderung der Konfiguration des Zeigeobjekts, einer Handgeste der Hand (114) des Präsentators (106), in einem vorausbestimmten Zeitintervall, um ein zeitvariantes Merkmal einer anzuzeigenden Markierung (436) auszuwählen, wobei eine Vielzahl von Tiefenbildern aufgenommen wird und Mustererkennung angewendet wird, um die Handgeste zu identifizieren, **gekennzeichnet durch**
- Bereitstellen des erzeugten Rückkopplungssignals (438) für einen Präsentator (106) vor Anzeige der Markierung (436) am bestimmten Ort der gezeigten Position (116), und
- Anzeigen (S10) der Markierung (436) der gezeigten Position (116) im Zielbereich (104) basierend auf dem bestimmten Ort der gezeigten Position (116).

2. Verfahren nach Anspruch 1, wobei das Verfahren weiterhin Folgendes umfasst:
- Bestimmen (S5) einer Distanz (x) zwischen einem Referenzpunkt (327) des Zeigeobjekts (108) und dem Zielbereich (104),
wobei das Bestimmen (S7) des Orts der gezeigten Position (116) das Bestimmen (S7) des Orts der gezeigten Position (116) basierend auf der bestimmten Distanz (x) umfasst.

3. Verfahren nach Anspruch 1 oder 2, wobei das Verfahren weiterhin Folgendes umfasst:
- Bestimmen (S7) eines Zeigewinkels (A), der definiert wird zwischen der Zeigeachse (110) und einer Distanzlinie (232), die einer Distanz (x) zwischen dem Zeigeobjekt (116) und dem Zielbereich (104) zugeordnet ist,
wobei das Bestimmen (S7) des Orts der gezeigten Position (116) das Bestimmen (S7) des Orts der gezeigten Position (116) basierend auf dem bestimmten Zeigewinkel (A) umfasst.

4. Verfahren nach einem beliebigen der Ansprüche 1 bis 3, wobei das Aufnehmen (S2) des Tiefenbilds lichtlaufzeitbasiertes Erfassen des Zeigeobjekts (108) und des Zielbereichs (104) oder Stereo-Matching-basiertes Erfassen des Zeigeobjekts (108) und des Zielbereichs (104) umfasst.

5. Verfahren nach einem beliebigen der Ansprüche 1 bis 4, wobei das Anzeigen (S10) der Markierung (436) das Anpassen eines Merkmals der angezeigten Markierung (436) basierend auf der bestimmten Konfiguration des Zeigeobjekts (108) und/oder der bestimmten zeitabhängigen Änderung der Konfiguration des Zeigeobjekts (108) umfasst.

6. Markiervorrichtung (102) zum Markieren einer gezeigten Position (116) eines Zeigeobjekts (108) in einem Zielbereich (104), der eine Projektorleinwand, einen Fernsehbildschirm oder eine Tafel umfasst, wobei das Zeigeobjekt (108) eine längliche Form entlang einer Zeigeachse (110) umfasst, wobei die gezeigte Position (116) der Zeigeachse (110) zugeordnet ist, die den Zielbereich (104) schneidet, wobei die Markiervorrichtung (102) Folgendes umfasst:
- Mittel zum Aussenden eines Laserstrahls,
- eine Aufnahmeeinheit (540), die ausgelegt ist zum Aufnehmen eines Tiefenbilds des Zeigeobjekts (108) und des Zielbereichs (104), wobei das Zeigeobjekt (108) vom Zielbereich (104) beabstandet ist und zur gezeigten Position (116) im Zielbereich (104) zeigt,
- eine erste Bestimmungseinheit (542), die ausgelegt ist zum Bestimmen eines Orts der gezeigten Position (116) im Zielbereich (104) basierend auf dem aufgenommenen Tiefenbild,
- eine erste Bestimmungseinheit (542) und eine Anzeigeeinheit (544), die ausgelegt sind zum Erzeugen eines Rückkopplungssignals (438), das den bestimmten Ort der gezeigten Position (116) im Zielbereich (104) angibt, wobei das Rückkopplungssignal (438) von einem Laserstrahl stammt, der von der Markiervorrichtung (102) ausgesendet wird,
- eine zweite Bestimmungseinheit (546), die ausgelegt ist zum Bestimmen einer Konfiguration des Zeigeobjekts (108), nämlich einer Handhaltung einer Hand (114), unter Verwendung von Mustererkennung, um ein Merkmal einer an der Zeigeposition (116) anzuzeigenden Markierung (436) auszuwählen,
- eine dritte Bestimmungseinheit (548), die ausgelegt ist zum Bestimmen einer zeitabhängigen Änderung der Konfiguration des Zeigeobjekts (108), und die eine Einheit zum Bestimmen einer Handgeste darstellt, die basierend auf Mustererkennung der Geste der Hand (114) des Präsentators (106) funktioniert, **dadurch gekennzeichnet, dass**
- die Markiervorrichtung (102) ausgelegt ist zum Bereitstellen des erzeugten Rückkopplungssignals (438) für einen Präsentator (106) vor Anzeige der Markierung (436) am bestimmten Ort der gezeigten Position (116), und
- die Anzeigeeinheit (544) ausgelegt ist zum Anzeigen einer Markierung (436, 438) der gezeigten Position (116) im Zielbereich (104) basierend auf dem bestimmten Ort der gezeigten Position (116).

7. Markiervorrichtung (102) nach Anspruch 6, wobei die Markiervorrichtung (102) als Tiefenkamera ausgelegt ist.

8. Computerprogramm, das bei Ausführung durch einen Prozessor ausgelegt ist zum Durchführen oder Steuern eines Verfahrens zum Markieren einer gezeigten Position (116) eines Zeigeobjekts (108) in einem Zielbereich (104) nach einem beliebigen der Ansprüche 1 bis 5.

## Revendications

1. Procédé de marquage d'une position pointée (116) d'un objet de pointage (108) dans une zone cible (104) qui comprend un écran de projection, un écran de télévision ou un tableau, dans lequel l'objet de pointage (108) comprend une forme allongée le long d'un axe de pointage (110), dans lequel la position pointée (116) est associée à l'axe de pointage (110) coupant la zone cible (104), le procédé comprenant les étapes suivantes :
- acquérir (S2) une image de profondeur de l'objet de pointage (108) et de la zone cible (104), dans lequel l'objet de pointage (108) est situé à distance de la zone cible (104) et pointe la position pointée (116) dans la zone cible (104) en utilisant une caméra (102)
- déterminer (S7) un emplacement de la position pointée (116) dans la zone cible (104) sur la base de l'image de profondeur acquise,
- générer (S10) un signal de rétroaction (438) indiquant l'emplacement déterminé de la position pointée (116) dans la zone cible (104), dans lequel le signal de rétroaction (438) résulte d'un faisceau laser émis par la caméra (102),
- déterminer (S8) une configuration de l'objet de pointage (108), à savoir une posture d'une main (114) en utilisant la reconnaissance de formes, afin de sélectionner une caractéristique d'un marquage à afficher à la position de pointage (116),
- déterminer (S9) un changement dépendant du temps de la configuration de l'objet de pointage, un mouvement de la main (114) du présentateur (106), dans un intervalle de temps prédéterminé, afin de sélectionner une caractéristique variant dans le temps d'un marquage (436) à afficher, dans lequel une pluralité d'images de profondeur est acquise, et la reconnaissance de formes est utilisée pour identifier le mouvement de main, **caractérisé par** les étapes suivantes
- délivrer le signal de rétroaction (438) généré à un présentateur (106) avant l'affichage du marquage (436) à l'emplacement déterminé de la position pointée (116), et
- afficher (S10) le marquage (436) de la position pointée (116) dans la zone cible (104) sur la base de l'emplacement déterminé de la position pointée (116)

2. Procédé selon la revendication 1, le procédé comprenant en outre l'étape suivante :
- déterminer (S5) une distance (x) entre le point de référence (327) de l'objet de pointage (108) et la zone cible (104), dans lequel la détermination (S7) de l'emplacement de la position pointée (116) comprend la détermination (S7) de l'emplacement de la position pointée (116) sur la base de la distance déterminée (x).

3. Procédé selon la revendication 1 ou 2, le procédé comprenant en outre l'étape suivante :
- déterminer (S7) un angle de pointage (A) défini entre l'axe de pointage (110) et une ligne de distance (232) associée à une distance (x) entre l'objet de pointage (116) et la zone cible (104),
dans lequel la détermination (S7) de l'emplacement de la position pointée (116) comprend la détermination (S7) de l'emplacement de la position pointée (116) sur la base de l'angle de pointage (A) déterminé.

4. Procédé selon l'une quelconque des revendications 1 à 3, dans lequel l'acquisition (S2) de l'image de profondeur comprend la détection par la méthode de temps de vol de l'objet de pointage (108) et de la zone cible (104) ou la détection basée sur la stéréo correspondance de l'objet de pointage (108) et de la zone cible (104).

5. Procédé selon l'une quelconque des revendications 1 à 4, dans lequel l'affichage (S10) du marquage (436) comprend l'adaptation d'une caractéristique du marquage (436) affiché sur la base de la configuration déterminée de l'objet de pointage (108) et/ou le changement dépendant du temps déterminé de la configuration de l'objet de pointage (108).

6. Dispositif de marquage (102) pour marquer une position pointée (116) d'un objet de pointage (108) dans une zone cible (104) qui comprend un écran de projection, un écran de télévision ou un tableau, dans lequel l'objet de pointage (108) comprend une forme allongée le long d'un axe de pointage (110), dans lequel la position pointée (116) est associée à l'axe de pointage (110) coupant la zone cible (104), le dispositif de marquage (102) comprenant :
- des moyens pour émettre un faisceau laser,
- une unité d'acquisition (540) configurée pour acquérir une image de profondeur de l'objet de pointage (108) et de la zone cible (104), dans lequel l'objet de pointage (108) est agencé à distance de la zone cible (104) et pointe la position pointée (116) dans la zone cible (104),
- une première unité de détermination (542) configurée pour déterminer un emplacement de la position pointée (116) dans la zone cible (104) sur la base de l'image de profondeur acquise,
- la première unité de détermination (542) et une unité d'affichage (544) configurées pour générer un signal de rétroaction (438) indiquant l'emplacement déterminé de la position pointée (116) dans la zone cible (104), dans lequel le signal de rétroaction (438) résulte d'un faisceau laser émis par le dispositif de marquage (102),
- une deuxième unité de détermination (546) configurée pour déterminer une configuration de l'objet de pointage (108), à savoir une posture d'une main (114) en utilisant la reconnaissance de formes, afin de sélectionner une caractéristique d'un marquage (436) à afficher à la position de pointage (116),
- une troisième unité de détermination (548) configurée pour déterminer un changement dépendant du temps de la configuration de l'objet de pointage (108), et représente une unité de détermination de mouvement de main fonctionnant sur la base de la reconnaissance de formes du mouvement de la main (114) du présentateur (106), **caractérisé par**
- le dispositif de marquage (102) configuré pour délivrer le signal de rétroaction (438) généré à un présentateur (106) avant l'affichage du marquage (436) à l'emplacement déterminé de la position pointée (116), et
- l'unité d'affichage (544) configurée pour afficher un marquage (436, 438) de la position pointée (116) dans la zone cible (104) sur la base de l'emplacement déterminé de la position pointée (116)

7. Dispositif de marquage (102) selon la revendication 6 ; dans lequel le dispositif de marquage (102) est configuré comme une caméra de profondeur.

8. Programme informatique, qui, lorsqu'il est exécuté par un processeur, est configuré pour exécuter ou commander un procédé de marquage d'une position pointée (116) d'un objet de pointage (108) dans une zone cible (104) selon l'une des revendications 1 à 5.
